(19) Europäisches Patentamt / European Patent Office / Office européen des brevets

(11) **EP 2 889 995 A1**

(12) **EUROPEAN PATENT APPLICATION**

(43) Date of publication:
**01.07.2015 Bulletin 2015/27**

(51) Int Cl.:
*H02M 5/293* (2006.01)    *H02M 5/297* (2006.01)
*H02J 3/38* (2006.01)    *H02P 3/22* (2006.01)
*H02J 3/18* (2006.01)

(21) Application number: **14199698.3**

(22) Date of filing: **22.12.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **26.12.2013 JP 2013270323**

(71) Applicant: **Kabushiki Kaisha Yaskawa Denki
Kitakyushu-shi, Fukuoka 806-0004 (JP)**

(72) Inventors:
• **Takeda, Kotaro
Kitakyushu-shi, Fukuoka 806-0004 (JP)**
• **Yoshinaga, Wataru
Kitakyushu-shi, Fukuoka 806-0004 (JP)**
• **Tanaka, Takashi
Kitakyushu-shi, Fukuoka 806-0004 (JP)**
• **Naka, Takuya
Kitakyushu-shi, Fukuoka 806-0004 (JP)**
• **Inomata, Kentaro
Kitakyushu-shi, Fukuoka 806-0004 (JP)**

(74) Representative: **Grünecker Patent- und
Rechtsanwälte
PartG mbB
Leopoldstraße 4
80802 München (DE)**

(54) **Matrix converter, wind power generation system, and method for controlling matrix converter**

(57)    A matrix converter (3; 3A) according to embodiments includes a power conversion unit (10; 10A) and drive controllers (21 and 22; 21A and 22A). The power conversion unit (10; 10A) includes a plurality of bidirectional switches (Sw1 to Sw12) for connecting each phase of an alternating-current (AC) power supply (4) with each phase of a rotary electric machine (8). When the voltage of the AC power supply (4) is a predetermined value or less, the drive controllers (21 and 22; 21A and 22A) control the power conversion unit (10; 10A) to supply reactive power from the power conversion unit (10; 10A) to the AC power supply (4) and to control the torque of the rotary electric machine (8).

## FIG.1

**Description**

FIELD

The embodiments discussed herein are directed to a matrix converter, a wind power generation system, and a method for controlling the matrix converter.

BACKGROUND

Matrix converters have attracted attention as a new power converter because they are capable of reducing harmonic current and making effective use of regenerative power. Some matrix converters include a plurality of bidirectional switches for connecting each of the phases of an alternating-current (AC) power supply with each of the phases of a rotary electric machine, and control these bidirectional switches so as to perform power conversion.
In this kind of matrix converter, a technique has been known for stopping the power conversion operation when the voltage of an AC power supply becomes low for some reason. For example, when the voltage of an AC power supply becomes low while a motor is driven with the voltage of each phase of the AC power supply controlled by bidirectional switches, a technique for stopping power supply to the motor is used (for example, see Japanese Patent Application Laid-open No. 2005-287200).
In a matrix converter that has a rotary electric machine as a load, it is preferable that the power conversion operation be continued without being stopped even when the voltage of an AC power supply becomes low. In this case, it is more preferable that the torque of the rotary electric machine be controlled.
In view of the foregoing, an aspect of the embodiments provides a matrix converter, a wind power generation system, and a method for controlling the matrix converter that can continue the power conversion operation and control the torque of a rotary electric machine even when the voltage of an AC power supply becomes low.

SUMMARY

A matrix converter according to an embodiment includes a power conversion unit and a drive controller. The power conversion unit includes a plurality of bidirectional switches for connecting each phase of an alternating-current (AC) power supply with each phase of a rotary electric machine. The drive controller, when a voltage of the AC power supply is a predetermined value or less, controls the power conversion unit to supply reactive power from the power conversion unit to the AC power supply and to control the torque of the rotary electric machine.
According to one aspect of the embodiments, the matrix converter, a wind power generation system, and a method for controlling the matrix converter capable of continuing the power conversion operation and controlling the torque of a rotary electric machine even when the voltage of an AC power supply becomes low can be provided.

BRIEF DESCRIPTION OF DRAWINGS

The embodiments will be more perfectly recognized and the advantages thereof can be easily understood by referring to the following DESCRIPTION OF EMBODIMENTS with the accompanying drawings.

FIG. 1 is a view illustrating a configuration example of a wind power generation system according to a first embodiment.
FIG. 2 is a view illustrating a configuration example of a matrix converter illustrated in FIG. 1.
FIG. 3 is a view illustrating a configuration example of each bidirectional switch illustrated in FIG. 2.
FIG. 4 is a flowchart illustrating a control example of a controller illustrated in FIG. 2.
FIG. 5 is a view illustrating an example of a specific configuration of a second drive controller illustrated in FIG. 2.
FIG. 6 is a view illustrating an example of the relation between a grid reactive current reference and a grid voltage value.
FIG. 7 is a view illustrating a current type inverter model.
FIG. 8 is a view illustrating the relation between a generator phase and switch drive signals.
FIG. 9 is a view illustrating the relation between a grid correction phase and switch drive signals.
FIGS. 10A to 10C are views illustrating the state of switching elements by the switch drive signals.
FIG. 11 is a view illustrating an example of a spatial vector of a converter in the current type inverter model illustrated in FIG. 7.
FIG. 12 is a view illustrating the relation between current vectors in a part of the spatial vector illustrated in FIG. 11 and duty ratios.
FIG. 13 is a spatial vector view illustrating an example of the switching patterns corresponding to the current vectors.

FIG. 14 is a view illustrating the switching patterns of a grid pulse pattern generator.

FIG. 15 is a view illustrating a configuration example of a power conversion unit.

FIG. 16 is a view illustrating a configuration example of a matrix converter according to a second embodiment.

DESCRIPTION OF EMBODIMENTS

The embodiments of a matrix converter, a wind power generation system, and a method for controlling the matrix converter disclosed in the present application will now be described with reference to the accompanying drawings. It should be noted that the embodiments below are not intended to limit the scope of the invention. The following embodiments describe an example where a matrix converter converts and supplies power generated by a rotary electric machine serving as a three-phase alternating-current generator (ACG) to an alternating-current (AC) power supply, but the rotary electric machine is not limited to the ACG and may be an alternating-current (AC) motor, for example. A three-phase alternating-current (AC) power grid is described as an example of the AC power supply, but the AC power supply is not limited to this.

1. First Embodiment

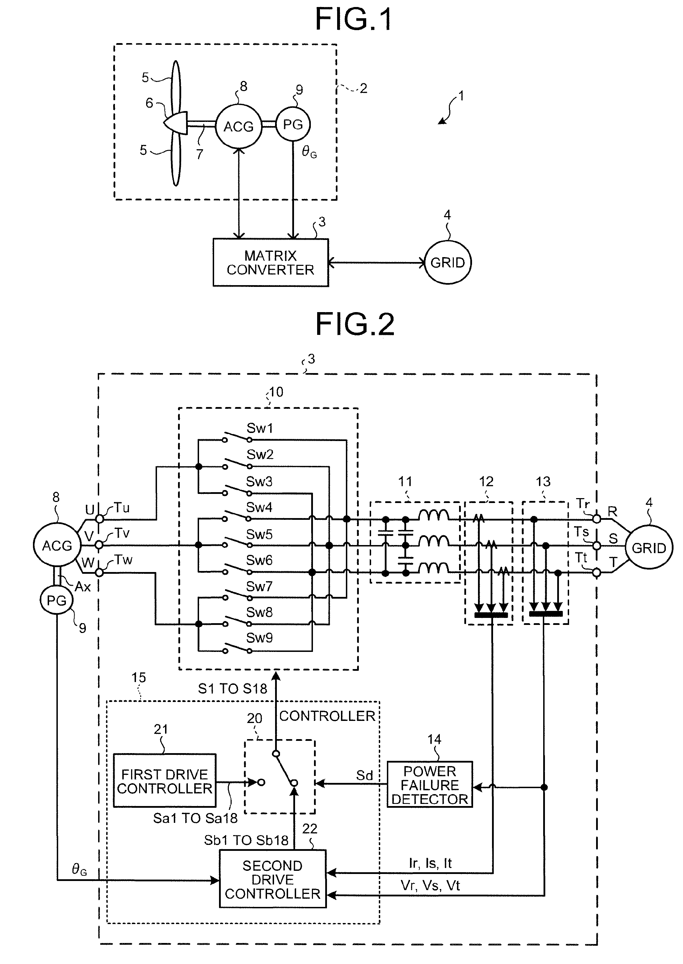

FIG. 1 is a view illustrating a configuration example of the wind power generation system according to a first embodiment. A wind power generation system 1 according to the first embodiment includes a power generation unit 2 and a matrix converter 3 as illustrated in FIG. 1. The matrix converter 3 is connected between the power generation unit 2 and a power grid 4, and converts power generated by the power generation unit 2 and outputs the converted power to the power grid 4.

The power generation unit 2 includes a plurality of blades 5, a rotor 6, a shaft 7, a rotary electric machine 8, and a position detector 9. The blades 5 are attached to the rotor 6 provided at the tip of the shaft 7, and receive wind power so as to rotate the rotor 6 and the shaft 7. The shaft 7 is attached to the rotary electric machine 8, and the rotary electric machine 8 can generate power corresponding to the torque of the rotor 6 and the shaft 7.

The rotary electric machine 8 is an alternating-current (AC) generator and is, for example, a permanent-magnet-type rotary electric machine. The position detector 9 detects a rotation position $\theta_G$ of the output shaft of the rotary electric machine 8 by detecting a rotation position of the shaft 7, for example.

1.1. Matrix Converter 3

FIG. 2 is a view illustrating a configuration example of the matrix converter 3. The matrix converter 3 includes grid-side terminals Tr, Ts, and Tt, generator-side terminals Tu, Tv, and Tw, a power conversion unit 10, an LC filter 11, a current detector 12, a voltage detector 13, a power failure detector 14, and a controller 15 as illustrated in FIG. 2. The R phase, the S phase, and the T phase of the power grid 4 are connected to the grid-side terminals Tr, Ts, and Tt, respectively, whereas the U phase, the V phase, and the W phase of the rotary electric machine 8 are connected to the generator-side terminals Tu, Tv, and Tw, respectively.

The power conversion unit 10 includes a plurality of bidirectional switches Sw1 to Sw9 for connecting each of the R phase, the S phase, and the T phase of the power grid 4 with each of the U phase, the V phase, and the W phase of the rotary electric machine 8. The bidirectional switches Sw1 to Sw3 are bidirectional switches for connecting the R phase, the S phase, and the T phase of the power grid 4 with the U phase of the rotary electric machine 8.

The bidirectional switches Sw4 to Sw6 are bidirectional switches for connecting the R phase, the S phase, and the T phase of the power grid 4 with the V phase of the rotary electric machine 8. The bidirectional switches Sw7 to Sw9 are bidirectional switches for connecting the R phase, the S phase, and the T phase of the power grid 4 with the W phase of the rotary electric machine 8.

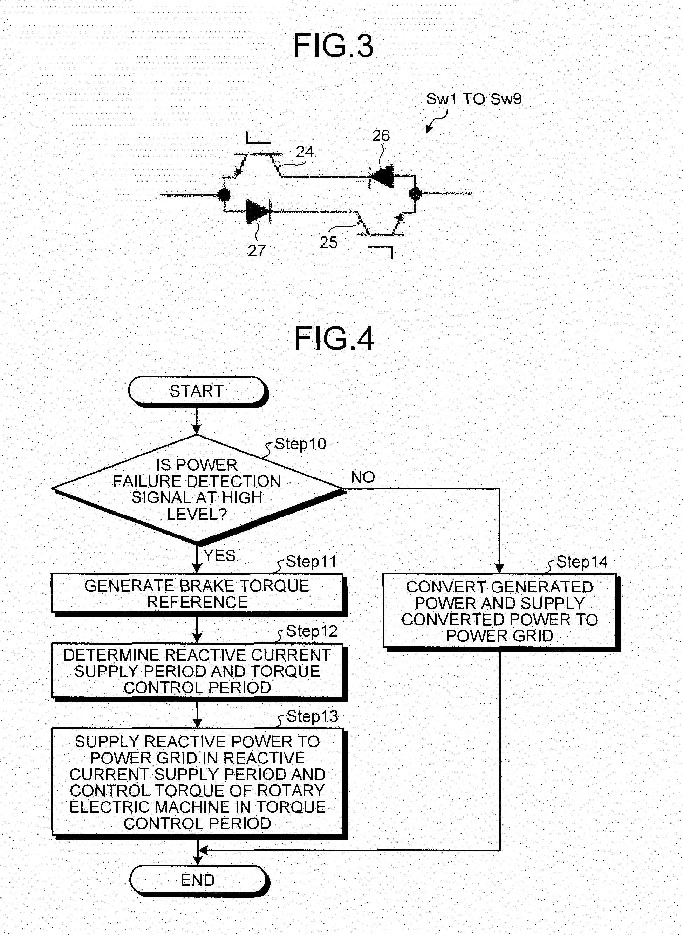

Each of the bidirectional switches Sw1 to Sw9 has the configuration as illustrated in FIG. 3, for example. FIG. 3 is a view illustrating a configuration example of each of the bidirectional switches Sw1 to Sw9. Each of the bidirectional switches Sw1 to Sw9 has the configuration where a serial connection body including a unidirectional switching element 24 and a diode 26 is connected to a serial connection body including a unidirectional switching element 25 and a diode 27 in parallel in a reverse direction as illustrated in FIG. 3.

The unidirectional switching elements 24 and 25 are semiconductor switching elements such as a metal-oxide-semiconductor field-effect transistor (MOSFET) and an insulated gate bipolar transistor (IGBT). The unidirectional switching elements 24 and 25 may be next-generation semiconductor switching elements such as silicon carbide (SiC) and gallium nitride (GaN).

The configuration of each of the bidirectional switches Sw1 to Sw9 is not limited to the configuration illustrated in FIG. 3. For example, in the example illustrated in FIG. 3, cathodes of the diodes 26 and 27 are not connected to each other, but each of the bidirectional switches Sw1 to Sw9 may have the configuration where cathodes of the diodes 26 and 27 are connected to each other. When the unidirectional switching elements 24 and 25 are reverse-element IGBTs, the diodes 26 and 27 are not necessarily provided.

Referring back to FIG. 2, a description will be made of the matrix converter 3. The LC filter 11 is provided between the R phase, the S phase, and the T phase of the power grid 4 and the power conversion unit 10, and reduces the influence of noise from the power conversion unit 10 to the power grid 4. Specifically, the LC filter 11 includes three reactors and three capacitors, and removes switching noise resulting from the switching of the bidirectional switches Sw1 to Sw9 included in the power conversion unit 10. The configuration of the LC filter 11 is not limited to the configuration illustrated in FIG. 2 and the LC filter 11 may have another configuration.

The current detector 12 is provided between the power grid 4 and the LC filter 11, and detects instantaneous values Ir, Is, and It of current flowing between the matrix converter 3 and each of the R phase, the S phase, and the T phase of the power grid 4 (hereinafter referred to as grid phase current values Ir, Is, and It). The current detector 12 detects current using a hall element serving as a magnetoelectric conversion element, for example.

The voltage detector 13 is provided between the power grid 4 and the power conversion unit 10, and detects voltage values Vr, Vs, and Vt of the R phase, the S phase, and the T phase of the power grid 4 (hereinafter referred to as grid phase voltage values Vr, Vs, and Vt).

The power failure detector 14 detects whether a voltage value Va of a grid voltage (hereinafter referred to as a grid voltage value Va) is a voltage value V1 or less. When the grid voltage value Va is the voltage value V1 or less, the power failure detector 14 determines that power failure occurs in the power grid 4, and outputs a high-level power failure detection signal Sd. When the grid voltage value Va exceeds the voltage value V1, the power failure detector 14 determines that no power failure occurs in the power grid 4, and outputs a low-level power failure detection signal Sd.

The power failure detector 14 converts, for example, the grid phase voltage values Vr, Vs, and Vt to $\alpha\beta$ components of two orthogonal axes on the fixed coordinates, and obtains a grid voltage value $V\alpha$ in the $\alpha$-axis direction and a grid voltage value $V_{\beta*}$ in the $\beta$-axis direction. The power failure detector 14 calculates the square root of the sum of the squared grid voltage values $V_{\alpha}$ and $V_{\beta}$ ($=\sqrt{(V_{\alpha}^2 + V_{\beta}^2)}$), and defines the calculated result as the grid voltage value Va.

The controller 15 generates switch drive signals S1 to S18 corresponding to the power failure detection signal Sd, and controls the bidirectional switches Sw1 to Sw9 in the power conversion unit 10 using the switch drive signals S1 to S18.

FIG. 4 is a flowchart illustrating a control example of the controller 15. As illustrated in FIG. 4, the controller 15 determines whether the power failure detection signal Sd is at a high level (Step 10). When determining that the power failure detection signal Sd is at a high level (Yes at Step 10), the controller 15 generates a brake torque reference Ibra based on the rotation position $\theta_G$ of the rotary electric machine 8 (Step 11) .

For example, the controller 15 determines the rotation speed $\omega_G$ of the rotary electric machine 8 based on the rotation position $\theta_G$ of the rotary electric machine 8, and generates the brake torque reference Ibra so that a deviation between the rotation speed $\omega_G$ and the set speed $\omega$ref becomes zero. The controller 15 defines, for example, the rotation speed $\omega_G$ just before the power failure detection signal Sd becomes at a high level as the set speed $\omega$ref.

Subsequently, the controller 15 determines a reactive current supply period T1 and a torque control period T2 based on a value of reactive current supplied to the power grid 4 and the brake torque reference Ibra (Step 12). The reactive current supply period T1 is a period when reactive current is supplied from the matrix converter 3 to the power grid 4, whereas the torque control period T2 is a period when the matrix converter 3 controls the torque of the rotary electric machine 8.

The controller 15 controls the power conversion unit 10 so as to execute a reactive current supply process and a torque control process in a sequential or reverse order. The reactive current supply process causes reactive current to be supplied from the power conversion unit 10 to the power grid 4 in the reactive current supply period T1, and the torque control process causes the power conversion unit 10 to control the torque of the rotary electric machine 8 in the torque control period T2 (Step 13). When the power failure detection signal Sd is continuously at a high level, the controller 15 repeats the process at Steps 11 to 13.

When determining that the power failure detection signal Sd is not at a high level (No at Step 10), the controller 15 controls the power conversion unit 10 so as to supply power generated by the rotary electric machine 8 to the power grid 4 (Step 14). In such a process, for example, the controller 15 controls the power conversion unit 10 so that power generated by the rotary electric machine 8 is converted to the power corresponding to the voltage and the frequency of the power grid 4 and the converted power is output to the power grid 4.

In this manner, the matrix converter 3 supplies reactive power to the power grid 4 so as to continue the power conversion operation and control the torque of the rotary electric machine 8 when the voltage of the power grid 4 becomes low. This process can reduce the rotation speed $\omega_G$ of the rotary electric machine 8, for example, even when power failure occurs in the power grid 4. Accordingly, a situation can be avoided, for example, where the power generation unit 2 is broken due to the rotation speed $\omega_G$ of the rotary electric machine 8 exceeding the rating of the power generation unit 2.

The controller 15 includes a microcomputer that includes, for example, a central processing unit (CPU), a read only memory (ROM), a random access memory (RAM), and an input/output port, and various kinds of circuit boards. A CPU in the microcomputer reads and executes a computer program stored in the ROM so as to achieve the control described above.

The controller 15 includes, for example, a switching unit 20, a first drive controller 21, and a second drive controller 22 as illustrated in FIG. 2, and achieves the control described above. The CPU reads and executes the computer program so as to achieve functions of these switching unit 20, first drive controller 21, and second drive controller 22. At least one of or all of the switching unit 20, the first drive controller 21, and the second drive controller 22 may be configured with only hardware.

The switching unit 20 selects the switch drive signals S1 to S18 to be output to the power conversion unit 10 based on the power failure detection signal Sd output from the power failure detector 14 and outputs the selected switch drive signals. Specifically, when the power failure detection signal Sd is at a low level, the switching unit 20 outputs switch drive signals Sa1 to Sa18 generated by the first drive controller 21 as the switch drive signals S1 to S18. When the power failure detection signal Sd is at a high level, the switching unit 20 outputs switch drive signals Sb1 to Sb18 generated by the second drive controller 22 as the switch drive signals S1 to S18.

The first drive controller 21 generates a voltage reference. Such a voltage reference is, for example, based on the torque reference specifying the torque that the rotary electric machine 8 needs to generate, and is generated according to the vector control rule of known synchronous generators. The first drive controller 21 generates the switch drive signals Sa1 to Sa18 for outputting a voltage corresponding to a voltage reference to the rotary electric machine 8 according to the pulse width modulation (PWM) control method for known matrix converters, and outputs the generated switch drive signals Sa1 to Sa18 to the power conversion unit 10.

The bidirectional switches Sw1 to Sw9 in the power conversion unit 10 are pulse-width-modulation (PWM) controlled by the switch drive signals Sa1 to Sa18. Accordingly, the power conversion unit 10 converts power generated by the rotary electric machine 8 to active power corresponding to the voltage and the frequency of the power grid 4, and outputs the converted active power to the power grid 4.

The second drive controller 22 generates the switch drive signals Sb1 to Sb18 based on the grid phase voltage values Vr, Vs, and Vt, the grid phase current values Ir, Is, and It, and the rotation position $\theta_G$. The second drive controller 22 individually controls the unidirectional switching elements 24 and 25 included in each of the bidirectional switches Sw1 to Sw9 using the switch drive signals Sb1 to Sb18, and repeats the reactive current supply process and the torque control process described above.

The second drive controller 22 controls the torque of the rotary electric machine 8 by supplying reactive power to the power grid 4 and outputting the switch drive signals Sb1 to Sb18 to the power conversion unit 10 so that a connection is intermittently made between the phases (lines) of the rotary electric machine 8 through the power conversion unit 10.

The resistance in series with the inductance is present in the rotary electric machine 8. Current flows into the resistance of the rotary electric machine 8 and the torque is generated in the rotary electric machine 8 by making a connection between the phases of the rotary electric machine 8 through the power conversion unit 10. The connection is intermittently made between the phases of the rotary electric machine 8 through the power conversion unit 10. Therefore, the second drive controller 22 supplies reactive current from the power conversion unit 10 to the power grid 4 at a timing when no connection is made between the phases of the rotary electric machine 8, and enables the power conversion unit 10 to continue the power conversion operation. The following describes in detail an example of a specific configuration of the second drive controller 22.

1.2. Second Drive Controller 22

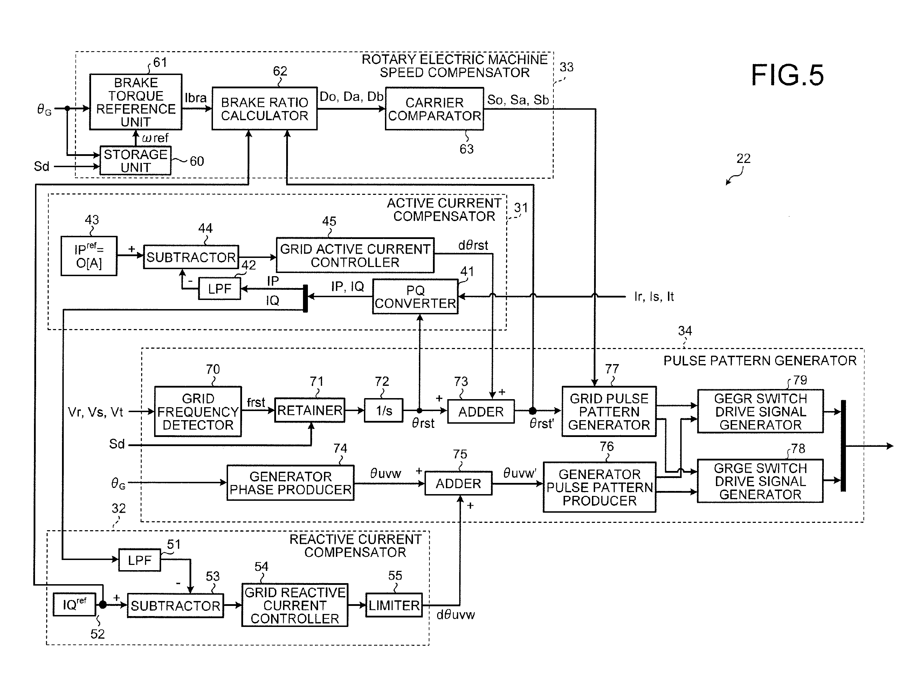

FIG. 5 is a view illustrating an example of a specific configuration of the second drive controller 22. The second drive controller 22 includes an active current compensator 31, a reactive current compensator 32, a rotary electric machine speed compensator 33, and a pulse pattern generator 34 as illustrated in FIG. 5.

1.2.1. Active Current Compensator 31

The active current compensator 31 generates a grid phase compensation value d$\theta$rst based on the grid phase current values Ir, Is, and It and a voltage phase $\theta$rst of the power grid 4 (hereinafter referred to as a grid phase $\theta$rst), and outputs the generated grid phase compensation value d$\theta$rst to the pulse pattern generator 34.

The active current compensator 31 includes a pocket query (PQ) converter 41, a low-pass filter (LPF) 42, a grid active current reference unit 43, a subtractor 44, and a grid active current controller 45.

The PQ converter 41 converts the grid phase current values Ir, Is, and It to $\alpha\beta$ components of two orthogonal axes on the fixed coordinates, and converts the converted components of the $\alpha\beta$ axis coordinate system to components of the rotation coordinate system that rotates depending on the grid phase $\theta$rst so as to obtain grid active current IP and grid reactive current IQ.

The PQ converter 41 calculates, for example, the following expression (1) so as to obtain the grid active current IP and the grid reactive current IQ.

$$\left(\frac{\mathrm{IP}}{\mathrm{IQ}}\right) = \left(\begin{array}{cc} \cos\theta\mathrm{rst} & -\sin\theta\mathrm{rst} \\ \sin\theta\mathrm{rst} & \cos\theta\mathrm{rst} \end{array}\right)\left(\begin{array}{ccc} 1 & -1/2 & -1/2 \\ 0 & \sqrt{3/2} & -\sqrt{3/2} \end{array}\right)\left(\begin{array}{c} \mathrm{Ir} \\ \mathrm{Is} \\ \mathrm{It} \end{array}\right) \qquad (1)$$

The LPF 42 removes high-frequency components from the grid active current IP, and outputs the resultant current to the subtractor 44. This process removes the influence of switching noise from the grid active current IP.

The subtractor 44 subtracts the output of the LPF 42 from a grid active current reference IPref output from the grid active current reference unit 43, calculates a grid active current deviation that is a deviation between the grid active current reference IPref and the grid active current IP, and outputs the calculated grid active current deviation to the grid active current controller 45.

The grid active current controller 45 is, for example, configured from a proportional integration (PI) controller, performs a proportional integration operation so that the grid active current deviation becomes zero, and generates the grid phase compensation value $d\theta$rst. The grid active current reference IPref is set to be zero, and the grid active current controller 45 generates the grid phase compensation value $d\theta$rst so that the grid active current IP becomes zero.

### 1.2.2. Reactive Current Compensator 32

The reactive current compensator 32 illustrated in FIG. 5 generates a generator phase correction value $d\theta$uvw based on a grid reactive current reference IQref, and outputs the generated generator phase correction value $d\theta$uvw to the pulse pattern generator 34. The reactive current compensator 32 includes a low-pass filter (LPF) 51, a grid reactive current reference unit 52, a subtractor 53, and a grid reactive current controller 54.

The grid reactive current reference unit 52 generates and outputs the grid reactive current reference IQref. The subtractor 53 subtracts the output of the LPF 51 from the grid reactive current reference IQref, calculates a grid reactive current deviation that is a deviation between the grid reactive current reference IQref and the grid reactive current IQ, and outputs the calculated grid reactive current deviation to the grid reactive current controller 54.

The grid reactive current controller 54 (an example of a reactive current reference generator) is, for example, configured from a PI controller, performs a proportional integration operation so that the grid reactive current deviation becomes zero, and generates the generator phase correction value $d\theta$uvw. For example, a value corresponding to the grid voltage value Va can be defined as the grid reactive current reference IQref.

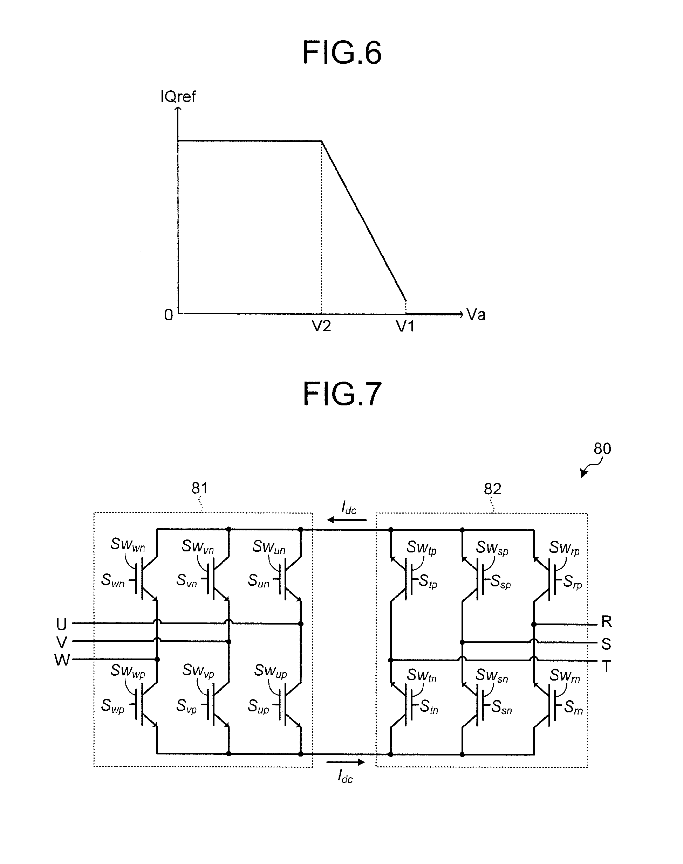

FIG. 6 is a view illustrating an example of the relation between the grid reactive current reference IQref and the grid voltage value Va. As illustrated in FIG. 6, when the grid voltage value Va exceeds a voltage value V2 serving as a second threshold and is the voltage value V1 serving as a first threshold or less, the grid reactive current reference unit 52 generates the grid reactive current reference IQref that decreases a value based on the relation represented by a straight line as the grid voltage value Va increases.

The grid reactive current reference unit 52 generates the grid reactive current reference IQref that has the maximum value when the grid voltage value Va is the voltage value V2 serving as a second threshold or less and has zero value when the grid voltage value Va exceeds the voltage value V1 serving as a first threshold. The relation between the grid reactive current reference IQref and the grid voltage value Va is not limited to the example illustrated in FIG. 6, and may be a different relation.

### 1.2.3. Rotary Electric Machine Speed Compensator 33

The rotary electric machine speed compensator 33 illustrated in FIG. 5 acquires the rotation position $\theta_G$ of the rotary electric machine 8, the grid reactive current reference IQref, and a grid correction phase $\theta$rst', generates pulse width modulation (PWM) signals So, Sa, and Sb, and outputs the generated PWM signals to the pulse pattern generator 34. The rotary electric machine speed compensator 33 includes a storage unit 60, a brake torque reference unit 61, and a brake ratio calculator 62, and a carrier comparator 63.

The storage unit 60 stores therein the rotation speed $\omega_G$ just before the power failure detection signal Sd becomes at a high level as the set speed $\omega$ref.

The brake torque reference unit 61 (an example of a torque reference generator) determines the rotation speed $\omega_G$ of the rotary electric machine 8 based on the rotation position $\theta_G$ of the rotary electric machine 8, and generates the brake torque reference Ibra so that a deviation between the rotation speed $\omega_G$ and the set speed $\omega$ref becomes zero. The brake torque reference unit 61 outputs the generated brake torque reference Ibra to the brake ratio calculator 62. The brake torque reference unit 61 determines the set speed $\omega$ref, for example, based on the internal set speed parameter Ps.

For example, when the set speed parameter Ps is "0", the brake torque reference unit 61 generates the brake torque reference Ibra using the set speed $\omega$ref stored in the storage unit 60. When the set speed parameter Ps is "1", the brake torque reference unit 61 defines a predetermined upper limit speed $\omega$max as the set speed $\omega$ref.

The brake ratio calculator 62 (an example of a ratio calculator) determines a duty ratio Do based on the brake torque reference Ibra and the grid reactive current reference IQref. The duty ratio Do is a ratio of the reactive current supply period T1 to a carrier cycle Tc. The brake ratio calculator 62 calculates, for example, the following expression (2) so as to determine the duty ratio Do. The expression (2) is the duty ratio corresponding to a ratio of the current flowing between the phases of the rotary electric machine 8 to the current output to the power grid 4.

Expression 2

$$D_o = \frac{I_{bra}}{I_{bra} + IQ_{ref}} \qquad (2)$$

The brake ratio calculator 62 also determines duty ratios Da and Db based on the duty ratio Do and the grid correction phase $\theta$rst'. The duty ratio Da is a ratio of the later-mentioned vector a to the carrier cycle Tc, and the duty ratio Db is a ratio of the later-mentioned vector b to the carrier cycle Tc.

The brake ratio calculator 62 calculates, for example, the following expressions (3) and (4) so as to determine the duty ratios Da and Db. In the expressions (3) and (4), an angle $\theta$a is an angle between a grid current vector Io and the vector a, and is determined based on the grid correction phase $\theta$rst' as described later.

Expression 3

$$D_a = (1 - D_o)\left(\frac{1}{2} + \frac{\sqrt{3}}{2}\tan\left(\frac{\pi}{6} - \theta_a\right)\right) \qquad (3)$$

$$D_b = (1 - D_o)\left(\frac{1}{2} - \frac{\sqrt{3}}{2}\tan\left(\frac{\pi}{6} - \theta_a\right)\right) \qquad (4)$$

The carrier comparator 63 compares a carrier signal Sc with the duty ratios Do, Da, and Db so as to generate the PWM signals So, Sa, and Sb. The carrier signal Sc is, for example, a triangular wave, a sawtooth wave, or a trapezoidal wave, and the amplitude of the carrier signal Sc is "1".

For example, when a value of the carrier signal Sc increases, the carrier comparator 63 causes the level of the PWM signal So to be high and the level of the PWM signals Sa and Sb to be low until the value of the carrier signal Sc becomes a value of Do. When the value of the carrier signal Sc becomes the value of Do, the carrier comparator 63 causes the level of the PWM signal Sa to be high and the level of the PWM signals So and Sb to be low. When the value of the carrier signal Sc becomes a value of Do + Da, the carrier comparator 63 causes the level of the PWM signal Sb to be high and the level of the PWM signals So and Sa to be low.

For example, when a value of the carrier signal Sc lowers from 1, the carrier comparator 63 causes the level of the PWM signal Sb to be high and the level of the PWM signals So and Sa to be low until the value of the carrier signal Sc becomes a value of Db. When the value of the carrier signal Sc becomes the value of Db, the carrier comparator 63 causes the level of the PWM signal Sa to be high and the level of the PWM signals So and Sb to be low. When the value of the carrier signal Sc becomes a value of Db + Da, the carrier comparator 63 causes the level of the PWM signal So to be high and the level of the PWM signals Sa and Sb to be low.

In this manner, the carrier comparator 63 generates the PWM signals So, Sa, and Sb whose levels become high in the period corresponding to the duty ratios Do, Da, and Db in the carrier cycle Tc and outputs the generated PWM signals So, Sa, and Sb. The method for generating the PWM signals So, Sa, and Sb is not limited to the example described above, and any other method can be adopted by which the PWM signals So, Sa, and Sb whose levels become high in the period corresponding to the duty ratios Do, Da, and Db can be generated.

### 1.2.4. Pulse Pattern Generator 34

The pulse pattern generator 34 (an example of a generator) illustrated in FIG. 5 generates the switch drive signals S1 to S18 based on the grid phase voltage values Vr, Vs, and Vt, the rotation position $\theta_G$, the grid phase compensation value d$\theta$rst, the generator phase correction value d$\theta$uvw, the power failure detection signal Sd, and the PWM signals So, Sa, and Sb.

The pulse pattern generator 34 includes a grid frequency detector 70, a retainer 71, an integrator 72, an adder 73, a generator phase producer 74, and an adder 75. The pulse pattern generator 34 also includes a generator pulse pattern producer 76, a grid pulse pattern generator 77, a GrGe switch drive signal generator 78, and a GeGr switch drive signal generator 79.

The grid frequency detector 70 is, for example, a phase locked loop (PLL), and outputs a grid frequency frst synchronized with the voltage frequency of the power grid 4 based on the grid phase voltage values Vr, Vs, and Vt.

The retainer 71 retains the grid frequency frst output from the grid frequency detector 70 at a timing when the power failure detection signal Sd is converted from a low level to a high level, and release the retention of the grid frequency frst at a timing when the power failure detection signal Sd is converted from a high level to a low level.

The integrator 72 integrates the grid frequency frst output from the retainer 71, generates the grid phase $\theta$rst, and outputs the generated grid phase $\theta$rst to the active current compensator 31 and the adder 73. The adder 73 adds the grid phase compensation value d$\theta$rst to the grid phase $\theta$rst, generates the grid correction phase $\theta$rst', and outputs the generated grid correction phase $\theta$rst' to the grid pulse pattern generator 77.

The generator phase producer 74 multiplies the rotation position $\theta_G$ by the number of pole pairs of the rotary electric machine 8 so as to generate a generator phase $\theta$uvw and output the generated generator phase $\theta$uvw to the adder 75. The adder 75 adds the generator phase correction value d$\theta$uvw to the generator phase $\theta$uvw so as to generate a generator correction phase $\theta$uvw' and output the generated generator correction phase $\theta$uvw' to the generator pulse pattern producer 76.

The pulse pattern generator 34 generates the switch drive signals S1 to S18 using a current type inverter model illustrated in FIG. 7. FIG. 7 is a view illustrating the current type inverter model. Reactive current can be supplied to the power grid 4 by regarding the matrix converter 3 as a current source and regarding the matrix converter 3 as a virtual current type inverter/converter using the current type inverter model.

A current type inverter model 80 includes an inverter 81 and a converter 82 as illustrated in FIG. 7. The inverter 81 includes a plurality of switching elements Swup, Swvp, Swwp, Swun, Swvn, and Swwn (hereinafter may be referred to as switching elements Swup to Swwn) full-bridge connected to the U phase, the V phase, and the W phase of the rotary electric machine 8. The switching elements Swup to Swwn are driven by switch drive signals Sup, Svp, Swp, Sun, Svn, and Swn (hereinafter may be referred to as switch drive signals Sup to Swn).

The converter 82 includes a plurality of switching elements Swrp, Swsp, Swtp, Swrn, Swsn, and Swtn (hereinafter may be referred to as switching elements Swrp to Swtn) full-bridge connected to the R phase, the S phase, and the T phase of the power grid 4. The switching elements Swrp to Swtn are driven by switch drive signals Srp, Ssp, Stp, Srn, Ssn, and Stn (hereinafter may be referred to as switch drive signals Srp to Stn).

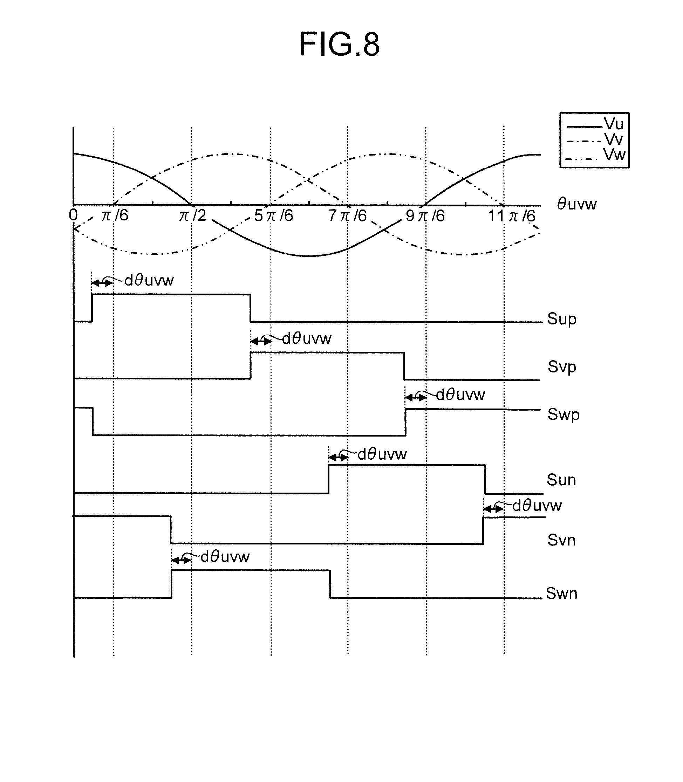

Referring back to FIG. 5, a description will be made of the pulse pattern generator 34. The generator pulse pattern producer 76 generates the switch drive signals Sup to Swn corresponding to the generator correction phase $\theta$uvw'. FIG. 8 is a view illustrating the relation between the generator phase $\theta$uvw and the switch drive signals Sup to Swn.

The generator pulse pattern producer 76 includes switching patterns of the switch drive signals Sup to Swn in the inverter 81 that supplies 120-degree conduction current to the generator phase $\theta$uvw, and outputs the switch drive signals Sup to Swn corresponding to the generator correction phase $\theta$uvw'.

The generator correction phase $\theta$uvw' is obtained by adding the generator phase correction value d$\theta$uvw obtained so that a grid reactive current deviation becomes zero to the generator phase $\theta$uvw. The generator pulse pattern producer 76 thus outputs, using the generator correction phase $\theta$uvw' as a reference, the switch drive signals Sup to Swn so that current delayed by $\Pi/2$ - d$\theta$uvw flows into the generator phase $\theta$uvw as illustrated in FIG. 8. With this process, reactive current having the magnitude equal to that of the grid reactive current reference IQref can be supplied to the power grid 4.

The generator pulse pattern producer 76 outputs the switch drive signals Sup to Swn so that switching elements supplying current between any two of the phases of the rotary electric machine 8 are always turned on. For example, in the range of $-\Pi/6 \leq \theta$uvw - d$\theta$uvw < $\Pi/6$, the switch drive signals Swp and Svn are at high levels and the rest switch drive signals are at low levels. Accordingly, current flows between the W phase and the V phase.

Similarly, in the range of $\Pi/6 \leq \theta$uvw - d$\theta$uvw < $\Pi/2$, the switch drive signals Sup and Svn are at high levels and current flows between the U phase and the V phase. In the range of $\Pi/2 \leq \theta uvw - d\theta uvw < 5\Pi/6$, the switch drive signals Sup and Swn are at high levels and current flows between the U phase and the W phase. In the range of $5\Pi/6 \leq \theta uvw - d\theta uvw < 7n/6$, the switch drive signals Svp and Swn are at high levels and current flows between the V phase and the W phase.

In the range of $7\Pi/6 \leq \theta uvw - d\theta uvw < 9n/6$, the switch drive signals Svp and Sun are at high levels and current flows between the V phase and the U phase. In the range of $9\Pi/6 \leq \theta uvw - d\theta uvw < 11\Pi/6$, the switch drive signals Swp and Sun are at high levels and current flows between the W phase and the U phase. In this manner, the generator pulse pattern producer 76 generates the switch drive signals Sup to Swn for advancing a pulse pattern by $d\theta uvw$ so that current delayed by n/2 flows into the generator phase $\theta uvw$.

Referring back to FIG. 5, a description will be made of the pulse pattern generator 34. The grid pulse pattern generator 77 includes switching patterns of the switch drive signals Srp to Stn for PWM controlling the converter 82, and generates the switch drive signals Srp to Stn based on the PWM signals So, Sa, and Sb and the grid correction phase $\theta rst'$.

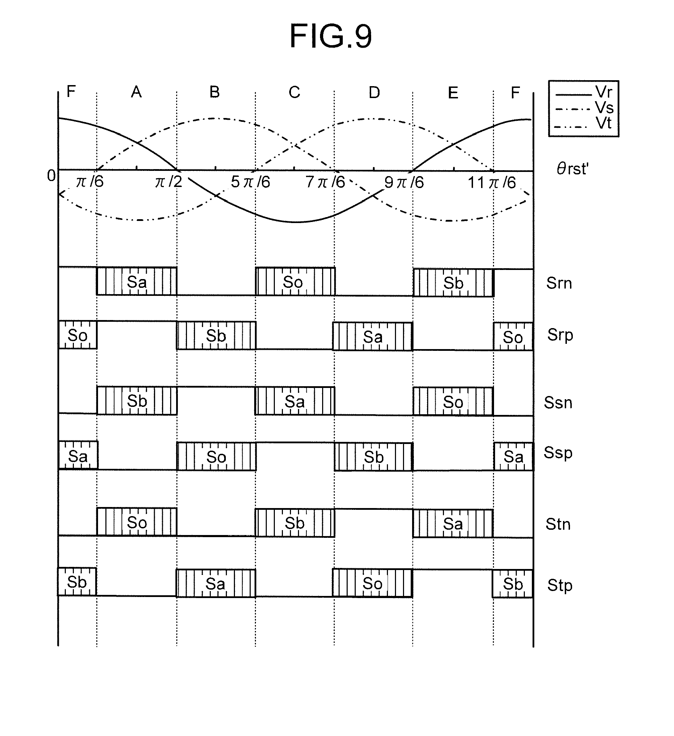

FIG. 9 is a view illustrating the relation between the grid correction phase $\theta rst'$ and the switch drive signals Srp to Stn, and represents the relation between the grid correction phase $\theta rst'$ and the switch drive signals Srp to Stn for supplying current delayed by n/2 to the grid phase $\theta rst$ and controlling the torque of the rotary electric machine 8.

The grid correction phase $\theta rst'$ is generated by adding the grid phase compensation value $d\theta rst$ obtained so that the grid active current IP becomes zero to the grid phase $\theta rst$. Thus, the grid pulse pattern generator 77 generates the switch drive signals Srp to Stn as illustrated in FIG. 9 based on the PWM signals Sa and Sb and the grid correction phase $\theta rst'$ so as to supply reactive current delayed by n/2 and having zero grid active current IP to the power grid 4.

The grid pulse pattern generator 77 generates the switch drive signals Srp to Stn as illustrated in FIG. 9 based on the PWM signal So and the grid correction phase $\theta rst'$ so as to control the torque of the rotary electric machine 8. Specifically, a connection is made between any one of three interphases (UV, VW, and WU) of the rotary electric machine 8 through the PWM signal So and either of the PWM signals Sa and Sb, and the torque corresponding to a period of the PWM signal So is given to the rotary electric machine 8.

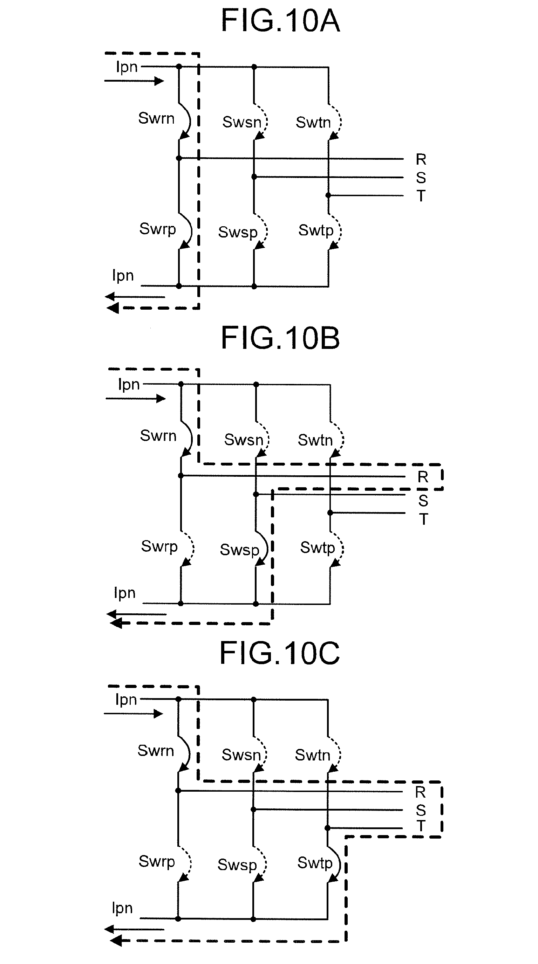

FIGS. 10A to 10C are views illustrating the state of the switching elements Swrp to Swtn by the switch drive signals Srp to Stn in the range of $-\Pi/6 \leq \theta rst < n/6$. In the range of $-\Pi/6 \leq \theta rst < \Pi/6$, as illustrated in FIG. 9, the switch drive signal Srn is at a high level, and the PWM signal So is used as the switch drive signal Srp, the PWM signal Sa as the switch drive signal Ssp, and the PWM signal Sb as the switch drive signal Stp.

In the range of $-\Pi/6 \leq \theta rst < \Pi/6$, the state of the switch drive signals Srp to Stn is shifted to the state in FIG. 10A, the state in FIG. 10B, and the state in FIG. 10C in the carrier cycle Tc, and this state shift is executed for each carrier cycle Tc.

In the state illustrated in FIG. 10A, the high-level switch drive signals Srn and Srp cause the switching elements Swrn and Swrp to be turned on and the converter 82 to be short-circuited. In the inverter 81, as described above, the switching elements supplying current between any two of the phases of the rotary electric machine 8 are always turned on, and a connection is made between the phases of the rotary electric machine 8 through the inverter 81. Accordingly, interphase power (linear power) generated in the rotary electric machine 8 is consumed by the resistance of the rotary electric machine 8 and the torque is generated in the rotary electric machine 8.

In the state illustrated in FIG. 10B, the high-level switch drive signals Srn and Ssp cause the switching elements Swrn and Swsp to be turned on. Accordingly, current flows between the R phase and the S phase of the power grid 4. In the state illustrated in FIG. 10C, the high-level switch drive signals Srn and Stp cause the switching elements Swrn and Swtp to be turned on. Accordingly, current flows between the R phase and the T phase of the power grid 4.

In this manner, the grid pulse pattern generator 77 causes the switching elements supplying current between any two of the phases of the power grid 4 to be turned on in the carrier cycle Tc so as to supply reactive current to the power grid 4. The grid pulse pattern generator 77 causes the upper and lower switching elements connected to the identical phase of the power grid 4 to be turned on in the carrier cycle Tc so as to generate the torque of the rotary electric machine 8. In this manner, the grid pulse pattern generator 77 can supply reactive current to the power grid 4 while generating the torque of the rotary electric machine 8 in the carrier cycle Tc.

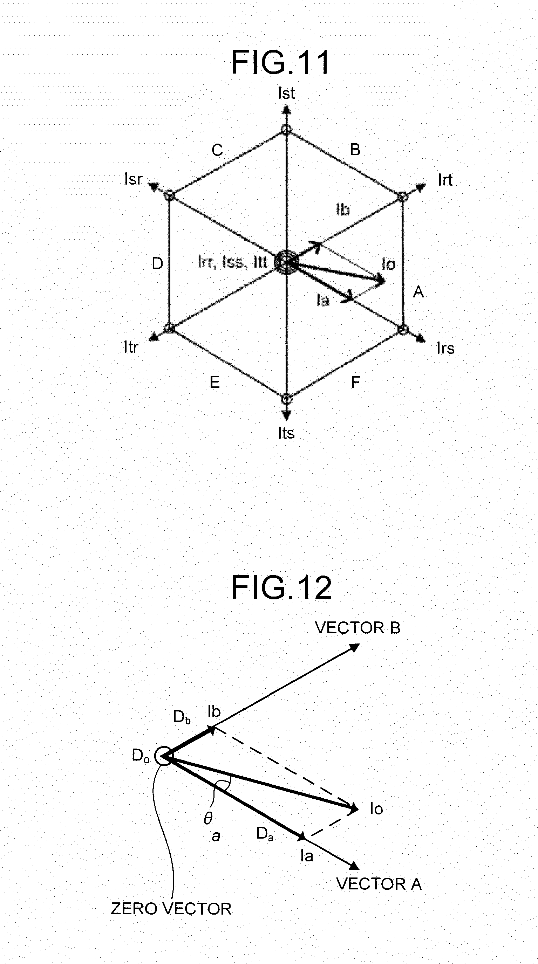

The grid pulse pattern generator 77 generates the switch drive signals Srp to Stn using a spatial vector modulation method. FIG. 11 is a view illustrating an example of a spatial vector of the converter 82 illustrated in FIG. 7. The spatial vector in FIG. 11 illustrates nine current vectors Irs, Irt, Ist, Isr, Itr, Its, Irr, Iss, and Itt according to the spatial vector modulation.

The grid pulse pattern generator 77 generates the switch drive signals Srp to Stn corresponding to these current vectors and outputs the generated switch drive signals Srp to Stn. Hereinafter, outputting switch drive signals corresponding to current vectors may be referred to as outputting the current vectors for convenience of explanation.

The current vectors Irs, Irt, Ist, Isr, Itr, and Its out of the nine current vectors are current vectors corresponding to the current flowing between different output phases. Each of the current vectors Irr, Iss, and Itt is a current vector corresponding to one output phase and having zero magnitude. Hereinafter, the current vector corresponding to the current flowing between different phases may be referred to as an "active vector", and the current vector corresponding to one output phase and having zero magnitude as a "zero vector".

The grid pulse pattern generator 77 determines which area the phase state of the grid correction phase θrst' is in out of the areas A to F (see FIG. 9), and outputs two active vectors adjacent in the determined area and a zero vector adjacent to these active vectors. This output state is represented by the grid current vector Io in FIG. 11, for example.

The grid current vector Io includes a vector a component, a vector b component, and a zero vector component. When the grid current vector Io is in a state illustrated in FIG. 11, the vector a component Ia is the current vector Irs and the vector b component Ib is the current vector Irt. The zero vector is the current vector Irr. In this case, the grid pulse pattern generator 77 outputs the current vectors Irs, Irt, and Irr.

The output time of each of the current vectors Irs, Irt, and Irr is adjusted by the PWM signals So, Sa, and Sb that become at high levels with a time ratio corresponding to the duty ratios Do, Da, and Db. FIG. 12 is a view illustrating the relation between the current vectors in a part of the spatial vector illustrated in FIG. 11 and the duty ratios Do, Da, and Db. In the example illustrated in FIG. 12, the angle θa represents an angle between the grid current vector Io and the vector a. The brake ratio calculator 62 described above determines the angle θa between the grid correction phase θrst' and the vector a.

As described in the expressions (3) and (4), the duty ratio Da is a ratio of the vector a to the carrier cycle Tc, and the duty ratio Db is a ratio of the vector b to the carrier cycle Tc. Thus, the output time of each of the current vectors is adjusted by the PWM signals So, Sa, and Sb that become at high levels with a time ratio corresponding to the duty ratios Do, Da, and Db.

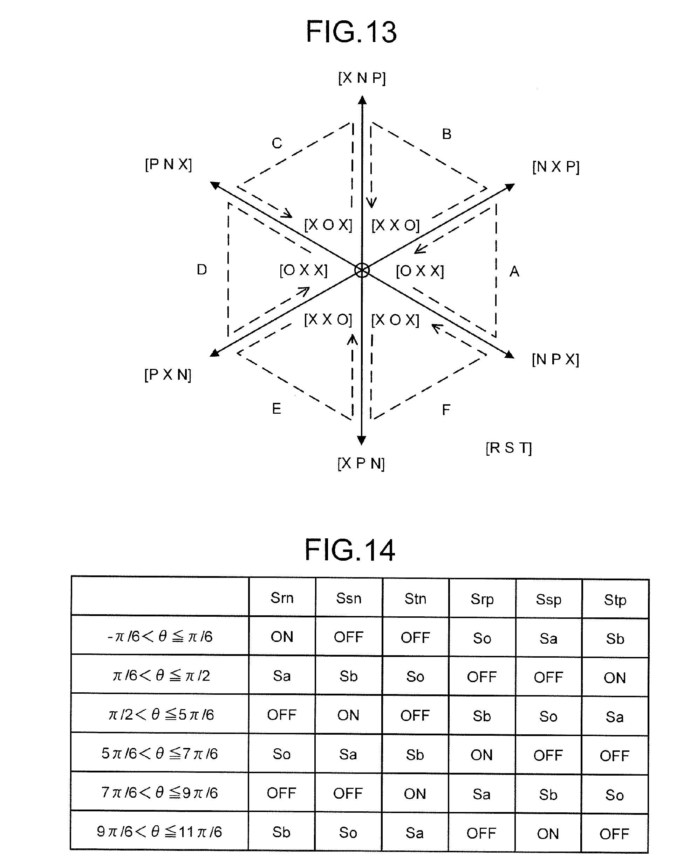

FIG. 13 is a view illustrating an example of the switching corresponding to the current vectors, and is a spatial vector view corresponding to FIG. 11. The dashed lines illustrated in FIG. 13 indicate the locus of switching patterns for the switching elements of the R phase, the S phase, and T phase. In FIG. 13, for example, "N P X" indicates that the switching element corresponding to the R phase is in an "N" state, the switching element corresponding to the S phase in a "P" state, and the switching element corresponding to the T phase in an "X" state.

In FIG. 13, "N" indicates that the upper switching element of the converter 82 is turned on, and "P" indicates that the lower switching element of the converter 82 is to be turned on. "○" indicates that the upper and lower switching elements of the converter 82 are to be turned on, and "X" indicates that the upper and lower switching elements of the converter 82 are to be turned off. As illustrated in FIG. 7, the upper switching elements are the switching elements Swtp, Swsp, and Swrp, whereas the lower switching elements are the switching elements Swtn, Swsn, and Swrn.

FIG. 14 is a view illustrating the switching patterns corresponding to the switching illustrated in FIG. 13. In FIG. 14, "ON" indicates that a switch drive signal is at a high level, and "OFF" indicates that a switch drive signal is at a low level. "So" indicates that the PWM signal So is used as a switch drive signal, "Sa" indicates that the PWM signal Sa is used as a switch drive signal, and "Sb" indicates that the PWM signal Sb is used as a switch drive signal.

The grid pulse pattern generator 77 determines which area the phase state of the grid correction phase θrst' is in out of the areas A to F (see FIG. 11), and outputs the switch drive signals Srp to Stn of the switching pattern corresponding to the determined area.

For example, in the range of $-\Pi/6 \leq \theta rst < \Pi/6$, the switch drive signal Srn is at a high level and the switch drive signals Ssn and Stn are at low levels. The switch drive signal Srp is at a high level with the duty ratio Do according to the PWM signal So. The switch drive signal Ssp is at a high level with the duty ratio Da according to the PWM signal Sa. The switch drive signal Stp is at a high level with the duty ratio Db according to the PWM signal Sb.

For example, in the range of $\Pi/6 \leq \theta rst < \Pi/2$, the switch drive signal Stp is at a high level and the switch drive signals Srp and Ssp are at low levels. The switch drive signal Stn is at a high level with the duty ratio Do according to the PWM signal So. The switch drive signal Srn is at a high level with the duty ratio Da according to the PWM signal Sa. The switch drive signal Ssn is at a high level with the duty ratio Db according to the PWM signal Sb.

In this manner, the grid pulse pattern generator 77 supplies reactive current delayed by 90 degrees and having zero grid active current IP to the power grid 4 using two active vectors, and short-circuits the interphases of the rotary electric machine 8 using the zero vector so as to control the torque of the rotary electric machine 8.

Referring back to FIG. 5, a description will be made of the pulse pattern generator 34. The GrGe switch drive signal generator 78 generates the switch drive signals Sru, Ssu, Stu, Srv, Ssv, Stv, Srw, Ssw, and Stw using the following expression (5) based on the switch drive signals Sun, Svn, Swn, Srp, Ssp, and Stp.

Expression 4

$$\begin{pmatrix} Sru & Srv & Srw \\ Ssu & Ssv & Ssw \\ Stu & Stv & Stw \end{pmatrix} = \begin{pmatrix} Sun \\ Svn \\ Swn \end{pmatrix} \begin{pmatrix} Srp & Ssp & Stp \end{pmatrix} \qquad (5)$$

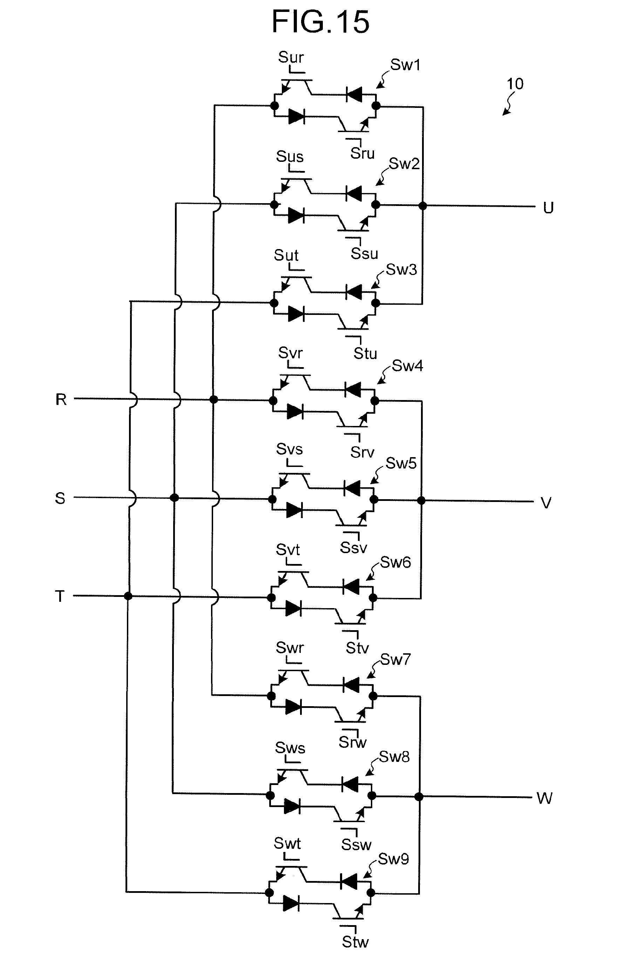

In the expression (5), the switch drive signals Sru, Ssu, Stu, Srv, Ssv, Stv, Srw, Ssw, and Stw are signals for driving the unidirectional switching elements 24 and 25 that supply current from the power grid 4 to the rotary electric machine 8 in each of the bidirectional switches Sw1 to Sw9 as illustrated in FIG. 15. FIG. 15 is a view illustrating a configuration example of the power conversion unit 10.

The GeGr switch drive signal generator 79 generates the switch drive signals Sur, Sus, Sut, Svr, Svs, Svt, Swr, Sws, and Swt using the following expression (6) based on the switch drive signals Srn, Ssn, Stn, Sup, Svp, and Swp.

$$\begin{pmatrix} Sur & Svr & Swr \\ Sus & Svs & Sws \\ Sut & Svt & Swt \end{pmatrix} = \begin{pmatrix} Srn \\ Ssn \\ Stn \end{pmatrix} \begin{pmatrix} Sup & Svp & Swp \end{pmatrix} \qquad (6)$$

In the expression (6), the switch drive signals Sur, Sus, Sut, Svr, Svs, Svt, Swr, Sws, and Swt are signals for driving the unidirectional switching elements 24 and 25 that supply current from the rotary electric machine 8 to the power grid 4 in each of the bidirectional switches Sw1 to Sw9 as illustrated in FIG. 15.

The switch drive signals Sur, Sru, Sus, Ssu, Sut, Stu, Svr, Srv, Svs, Ssv, Svt, Stv, Swr, Srw, Sws, Ssw, Swt, and Stw generated in this manner are output as the switch drive signals S1 to S18 from the pulse pattern generator 34 to the power conversion unit 10 with the correspondence relation illustrated in FIG. 15.

Using the switch drive signals S1 to S18, the power conversion unit 10 supplies reactive current to the power grid 4 in the reactive current supply period T1 for each carrier cycle Tc, and controls the torque of the rotary electric machine 8 in the torque control period T2 for each carrier cycle Tc. In this manner, the matrix converter 3 can control the torque of the rotary electric machine 8 while supplying reactive current to the power grid 4.

In the reactive current supply period T1, any one of the switch drive signals Srn, Ssn, and Stn is always at a high level, and any one of the switch drive signals Sup, Svp, and Swp is always at a high level. Accordingly, out of the unidirectional switching elements 24 and 25 included in each of the bidirectional switches Sw1 to Sw9, any one of the unidirectional switching elements that supply current from the power grid 4 to the rotary electric machine 8 is always turned on.

In the reactive current supply period T1, any one of the switch drive signals Sun, Svn, and Swn is always at a high level, and any one of the switch drive signals Srp, Ssp, and Stp is always at a high level. Accordingly, out of the unidirectional switching elements 24 and 25 included in each of the bidirectional switches Sw1 to Sw9, any one of the unidirectional switching elements that supply current from the rotary electric machine 8 to the power grid 4 is always turned on.

In the reactive current supply period T1, out of the unidirectional switching elements 24 and 25 included in each of the bidirectional switches Sw1 to Sw9, a unidirectional switching element that supplies current between any two of the phases of the power grid 4 is always turned on, and a unidirectional switching element that supplies current between any two of the phases of the rotary electric machine 8 is always turned on. This operation prevents a large amount of current from continuously flowing between the rotary electric machine 8 and the power grid 4, and enables the power conversion operation while performing current control even when the voltage of the power grid 4 is extremely lower than that of the rotary electric machine 8 such as in the case of power failure.

In the torque control period T2, out of the unidirectional switching elements 24 and 25 included in each of the bidirectional switches Sw1 to Sw9, a unidirectional switching element that corresponds to any one of the phases of the power grid 4 is always turned on, and a unidirectional switching element that supplies current between any two of the phases of the rotary electric machine 8 is always turned on. This operation prevents a large amount of current from continuously flowing into the rotary electric machine 8, and enables torque control of the rotary electric machine 8 even when the voltage of the power grid 4 is extremely lower than that of the rotary electric machine 8 such as in the case of power failure.

2. Second Embodiment

Subsequently, a description will be made of a matrix converter in a wind power generation system according to a second embodiment. The matrix converter according to the second embodiment differs from the matrix converter 3 according to the first embodiment in that interphase-connecting switches (an example of linear connection switches) provided between phases (lines) of a rotary electric machine 8 are used for controlling the torque of the rotary electric machine 8.

The same components as those of the matrix converter 3 according to the first embodiment may be given the same symbols, and detailed description thereof is omitted. A power generation unit in the wind power generation system according to the second embodiment has the same configuration as that of the power generation unit 2 according to the first embodiment, and detailed description thereof is omitted.

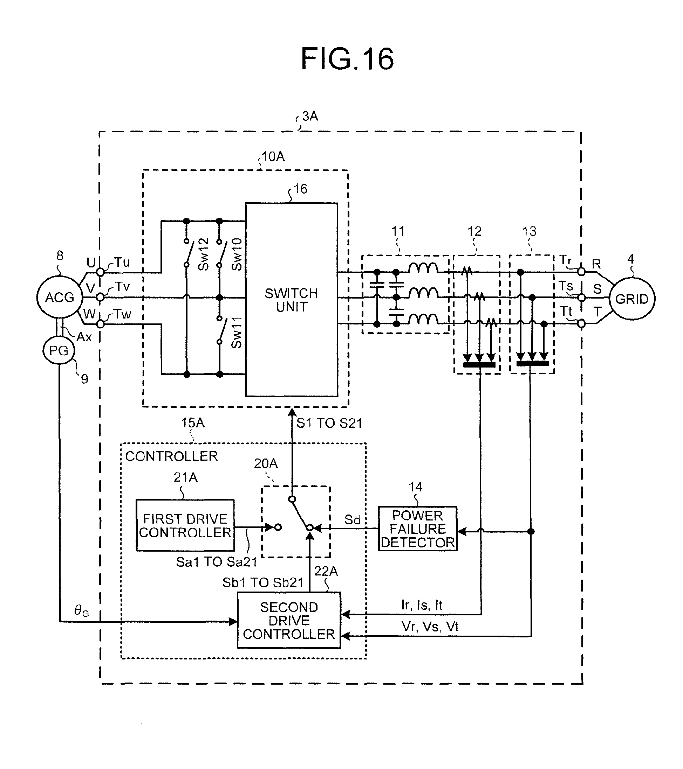

FIG. 16 is a view illustrating the configuration of a matrix converter 3A according to the second embodiment. The matrix converter 3A includes a power conversion unit 10A, an LC filter 11, a current detector 12, a voltage detector 13, a power failure detector 14, and a controller 15A as illustrated in FIG. 16.

Similarly to the power conversion unit 10, the power conversion unit 10A includes a switch unit 16 that is provided with a plurality of bidirectional switches Sw1 to Sw9 for connecting each of the R phase, the S phase, and the T phase of the power grid 4 with each of the U phase, the V phase, and the W phase of the rotary electric machine 8. The power conversion unit 10A further includes interphase-connecting switches Sw10 to Sw12 for making a connection between the phases of the rotary electric machine 8.

The interphase-connecting switch Sw10 is a switch for making a connection between the U phase and the V phase of the rotary electric machine 8, the interphase-connecting switch Sw11 is a switch for making a connection between the V phase and the W phase of the rotary electric machine 8, and the interphase-connecting switch Sw12 is a switch for making a connection between the U phase and the W phase of the rotary electric machine 8. The interphase-connecting switches Sw10 to Sw12 have the same configuration as that of the bidirectional switches Sw1 to Sw9, but may have the configuration different from that of the bidirectional switches Sw1 to Sw9.

The controller 15A includes a switching unit 20A, a first drive controller 21A, and a second drive controller 22A. The switching unit 20A selects switch drive signals S1 to S21 to be output to the power conversion unit 10A based on a power failure detection signal Sd output from the power failure detector 14 and outputs the selected switch drive signals to the power conversion unit 10A. The switch drive signals S1 to S18 are used for controlling the bidirectional switches Sw1 to Sw9, and the switch drive signals S19 to S21 are used for controlling the interphase-connecting switches Sw10 to Sw12.

Similarly to the first drive controller 21, the first drive controller 21A generates switch drive signals Sa1 to Sa18 and outputs the generated switch drive signals Sa1 to Sa18 to the switching unit 20A. The first drive controller 21A also generates low-level switch drive signals Sa19 to Sa21 and outputs the generated low-level switch drive signals Sa19 to Sa21.

When the power failure detection signal Sd is at a low level, the switching unit 20A outputs the switch drive signals Sa1 to Sa21 generated by the first drive controller 21A as the switch drive signals S1 to S21. Accordingly, the power conversion unit 10A converts power generated by the rotary electric machine 8 to active power corresponding to the voltage and the frequency of the power grid 4, and outputs the converted active power to the power grid 4. The interphase-connecting switches Sw10 to Sw12 are being turned off.

The second drive controller 22A generates the same signals as the switch drive signals Sb1 to Sb18 output when a brake torque reference Ibra is zero in the second drive controller 22 as the switch drive signals Sb1 to Sb18 and outputs the generated signals to the switching unit 20A. The second drive controller 22A can control a converter 82 using the 120-degree conduction control in the same manner as the control of an inverter 81.

The second drive controller 22A also generates, for example, switch drive signals Sb19 to Sb21 for making the interphase-connecting switches Sw10 to Sw12 at high levels for each carrier cycle Tc only in the period corresponding to the brake torque reference Ibra. The cycle when the high-level switch drive signals Sb19 to Sb21 are output is not limited to the carrier cycle Tc, and may be a period longer than the carrier cycle Tc.

When the power failure detection signal Sd is at a high level, the switching unit 20A outputs the switch drive signals Sb1 to Sb21 generated by the second drive controller 22A as the switch drive signals S1 to S21. Accordingly, the power conversion unit 10A can control the torque of the rotary electric machine 8 while supplying reactive power to the power grid 4.

In this manner, the power conversion unit 10A in the matrix converter 3A according to the second embodiment includes the interphase-connecting switches Sw10 to Sw12 for making a connection between the phases of the rotary electric machine 8. When the voltage of the power grid 4 is a predetermined value or less, the second drive controller 22A intermittently controls the interphase-connecting switches Sw10 to Sw12 so as to make a connection between the phases of the rotary electric machine 8 through the interphase-connecting switches Sw10 to Sw12. Accordingly, the matrix converter 3A can control the torque of the rotary electric machine 8 while supplying reactive power to the power grid 4.

The embodiment describes a control example where the interphase-connecting switches Sw10 to Sw12 are turned on at the same time, but the second drive controller 22A may control the interphase-connecting switches Sw10 to Sw12 in a random or predetermined order.

As described above, when the voltage of the power grid 4 (an example of an alternating-current (AC) power supply) is a predetermined value or less, the second drive controller 22 in the matrix converter 3 according to the embodiments controls the power conversion unit 10, supply reactive power from the power conversion unit 10 to the power grid 4, and controls the torque of the rotary electric machine 8. In this manner, the matrix converter 3 can supply reactive current to the power grid 4 and continue the power conversion operation even when the voltage of the power grid 4 becomes low.

In the wind power generation system 1, reactive power may be required to be supplied to the power grid 4 when the voltage of the power grid 4 becomes low due to power failure, for example. The matrix converter 3 and the wind power generation system 1 according to the embodiments can properly handle such a request.

When an administrator of the power grid 4 transmits a grid reactive current reference IQref specifying the magnitude of reactive power, such a grid reactive current reference IQref may be output from the grid reactive current reference unit 52 to the subtractor 53. With this configuration, the magnitude of reactive current of the power grid 4 can be set from the outside.

The second drive controller 22 uses the current type inverter model 80 as a switching model. The PWM switching patterns are given to the converter 82, and the 120-degree conduction switching patterns that include a phase for supplying reactive current whose magnitude corresponds to the grid reactive current reference IQref are given to the inverter 81. The switching patterns given to the converter 82 and the switching patterns given to the inverter 81 are combined and output as switch drive signals for the unidirectional switching elements 24 and 25 included in each of the bidirectional switches Sw1 to Sw9.

Such process causes the combined switching patterns to be output as the switch drive signals for the unidirectional switching elements 24 and 25 included in the bidirectional switches Sw1 to Sw9. Accordingly, reactive current whose magnitude corresponds to the grid reactive current reference IQref can be easily and accurately supplied to the power grid 4.

In the embodiments, the 120-degree conduction switching patterns are used in the inverter 81 for driving the power conversion unit 10, but the control method is not limited to the 120-degree conduction switching patterns. In other words, the control method may be any other method for performing current control by individually controlling the unidirectional switching elements 24 and 25 so as to supply reactive current to the power grid 4 and continue the power conversion operation, and various modifications can be made.

In the embodiments, the rotary electric machine 8 is described as a synchronous generator, but the rotary electric machine 8 may serve as an induction generator. When the rotary electric machine 8 serves as an induction generator, the matrix converter 3 has the following configuration, for example.

A generated power voltage due to residual magnetic flux is generated in an induction generator after power failure, and the position detector 9 detects the rotation speed of the induction generator. The controller 15 sets a torque reference to the induction generator to be approximately zero according to the vector control rule of known induction machines, generates a slip frequency reference based on the torque reference, adds the generated slip frequency reference to the rotation speed detected by the position detector 9, and generates an output frequency reference.

The controller 15 integrates the output frequency reference so as to generate the generator phase $\theta$uvw, and adds the generated generator phase $\theta$uvw to the generator phase correction value d$\theta$uvw so as to generate the generator correction phase $\theta$uvw'. This configuration can supply reactive current to the power grid 4 and continue the power conversion operation even when the voltage of the power grid 4 becomes low.

The embodiments describe examples where a generator is applied as the rotary electric machine 8, but a motor may be applied as the rotary electric machine 8, so that the speed electromotive force of the motor can continue the operation even when the voltage of the power grid 4 becomes low.

In other words, when the voltage of the power grid 4 becomes low, supplying power from the power grid 4 to the motor becomes difficult. However, a rotor of the motor is in a rotation state while reducing the speed. Therefore, an electromotive force generated by such rotation is, for example, supplied as reactive power to the power grid 4 so as to continue the operation.

**Claims**

**1.** A matrix converter (3; 3A) comprising:

a power conversion unit (10; 10A) that includes a plurality of bidirectional switches (Sw1 to Sw12) for connecting each phase of an alternating-current (AC) power supply (4) with each phase of a rotary electric machine (8); and a drive controller (22; 22A) that, when a voltage of the AC power supply (4) is a predetermined value or less, controls the power conversion unit (10; 10A) to supply reactive power from the power conversion unit (10; 10A) to the AC power supply (4) and to control the torque of the rotary electric machine (8).

2. The matrix converter (3; 3A) according to claim 1, wherein the drive controller (22; 22A) controls the power conversion unit (10; 10A) to intermittently make a connection between phases of the rotary electric machine (8) so as to control the torque of the rotary electric machine (8).

3. The matrix converter (3) according to claim 2, wherein the drive controller (22) controls, among unidirectional switching elements (24 and 25) included in the bidirectional switches (Sw1 to Sw12), unidirectional switching elements (24 and 25) for making a connection between phases of the rotary electric machine (8) so as to make a connection between phases of the rotary electric machine (8) through the unidirectional switching elements (24 and 25).

4. The matrix converter (3A) according to claim 2, wherein the power conversion unit (10A) further includes interphase-connecting switches (Sw10 to Sw12) for making a connection between phases of the rotary electric machine (8), and the drive controller (22A) controls the interphase-connecting switches (Sw10 to Sw12) when a voltage of the AC power supply (4) is a predetermined value or less so as to make a connection between phases of the rotary electric machine (8) through the interphase-connecting switch (Sw10 to Sw12).

5. The matrix converter (3; 3A) according to any one of claims 1 to 4, wherein the drive controller (22; 22A) intermittently makes a connection between phases of the rotary electric machine (8) with a duty ratio corresponding to a ratio of the current flowing between the phases of the rotary electric machine (8) to the current output to the AC power supply (4).

6. The matrix converter (3; 3A) according to claim 5, wherein the drive controller (22; 22A) controls the power conversion unit (10; 10A) to alternately perform a process for supplying reactive power from the power conversion unit (10) to the AC power supply (4) and a process for controlling the torque of the rotary electric machine (8).

7. The matrix converter (3; 3A) according to claim 5 or 6, further comprising:

a storage unit (60) that stores therein the rotation speed of the rotary electric machine (8) before a voltage of the AC power supply (4) becomes the predetermined value or less, wherein the drive controller (22; 22A) sets the current flowing between phases of the rotary electric machine (8) so that the rotation speed of the rotary electric machine (8) is identical with the rotation speed stored in the storage unit (60) when a voltage of the AC power supply (4) is the predetermined value or less.

8. The matrix converter (3) according to claim 3, wherein the drive controller (22) combines, in a current type inverter model (80) including a converter (82) and an inverter (81), a switch drive signal for the converter (82) with a switch drive signal for the inverter (81) to generate a switch drive signal for controlling the unidirectional switching elements (24 and 25).

9. The matrix converter (3; 3A) according to claim 8, wherein the drive controller (22; 22A) generates a first switch drive signal for turning on each of upper and lower switches of two respective different phases of the converter (82) and a second switch drive signal for turning on each of the upper and lower switches of one phase of the converter (82) for each predetermined period in a time division manner.

10. The matrix converter (3) according to claim 8 or 9, wherein the drive controller (22) advances a switch drive signal for supplying reactive current to the rotary electric machine (8) through 120-degree conduction for the amount of a phase corresponding to a reactive current reference to generate a switch drive signal for the inverter (81).

11. The matrix converter (3; 3A) according to claim 1, further comprising:

a power failure detector (14) that detects whether a voltage of the AC power supply (4) is a predetermined value or less, wherein the drive controller (22, 22A) includes:

a storage unit (60) that stores therein the rotation speed of the rotary electric machine (8) before the voltage of the AC power supply (4) becomes a predetermined value or less,
a reactive current reference generator (54) that generates a reactive current reference,
a torque reference generator (61) that generates a brake torque reference based on the rotation speed of the rotary electric machine and the rotation speed stored in the storage unit (60),
a ratio calculator (62) that calculates a ratio between a first period for supplying reactive power from the power conversion unit (3 or 3A) to the AC power supply (4) and a second period for controlling the torque of the rotary electric machine (8) based on the reactive current reference and the brake torque reference, and
a generator (34) that generates a switch drive signal for supplying reactive power from the power conversion unit (10; 10A) to the AC power supply (4) and a switch drive signal for controlling the torque of the rotary electric machine (8) based on the ratio calculated by the ratio calculator (62).

12. A wind power generation system (1) comprising:

the matrix converter (3; 3A) according to any one of claims 1 to 11;
blades (5);
a rotor (6) connected to the blades (5); and
a rotary electric machine (8) that outputs power generated by rotation of the rotor (6) to the matrix converter (3; 3A).

13. A method for controlling a matrix converter (3; 3A) comprising:

determining whether a voltage of an alternating-current (AC) power supply (4) is a predetermined value or less; and
controlling the torque of a rotary electric machine (8) while supplying reactive power from a power conversion unit (10; 10A) that includes a plurality of bidirectional switches (Sw1 to Sw12) for connecting each phase of the AC power supply (4) with each phase of the rotary electric machine (8) when the voltage of the AC power supply (4) is determined to be a predetermined value or less at the determining.

# FIG.1

# FIG.2

# FIG.3

Sw1 TO Sw9

26

24

27    25

# FIG.4

START

↓

Step10

IS POWER
FAILURE DETECTION
SIGNAL AT HIGH
LEVEL?

NO →

YES ↓    Step11

GENERATE BRAKE TORQUE
REFERENCE

↓    Step12

DETERMINE REACTIVE CURRENT
SUPPLY PERIOD AND TORQUE
CONTROL PERIOD

↓    Step13

SUPPLY REACTIVE POWER TO
POWER GRID IN REACTIVE
CURRENT SUPPLY PERIOD AND
CONTROL TORQUE OF ROTARY
ELECTRIC MACHINE IN TORQUE
CONTROL PERIOD

Step14

CONVERT GENERATED
POWER AND SUPPLY
CONVERTED POWER TO
POWER GRID

↓

END

FIG.5

# FIG.6

# FIG.7

# FIG.8

# FIG.9

# FIG.10A

# FIG.10B

# FIG.10C

# FIG.11

# FIG.12

# FIG.13

# FIG.14

|  | Srn | Ssn | Stn | Srp | Ssp | Stp |
|---|---|---|---|---|---|---|
| $-\pi/6 < \theta \leqq \pi/6$ | ON | OFF | OFF | So | Sa | Sb |
| $\pi/6 < \theta \leqq \pi/2$ | Sa | Sb | So | OFF | OFF | ON |
| $\pi/2 < \theta \leqq 5\pi/6$ | OFF | ON | OFF | Sb | So | Sa |
| $5\pi/6 < \theta \leqq 7\pi/6$ | So | Sa | Sb | ON | OFF | OFF |
| $7\pi/6 < \theta \leqq 9\pi/6$ | OFF | OFF | ON | Sa | Sb | So |
| $9\pi/6 < \theta \leqq 11\pi/6$ | Sb | So | Sa | OFF | ON | OFF |

# FIG.15

# FIG.16

## EUROPEAN SEARCH REPORT

**Application Number**

EP 14 19 9698

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROBERTO CARDENAS ET AL: "Control of the Reactive Power Supplied by a WECS Based on an Induction Generator Fed by a Matrix Converter", IEEE TRANSACTIONS ON INDUSTRIAL ELECTRONICS, IEEE SERVICE CENTER, PISCATAWAY, NJ, USA, vol. 56, no. 2, 1 February 2009 (2009-02-01), pages 429-438, XP011226622, ISSN: 0278-0046, DOI: 10.1109/TIE.2008.924031 * abstract; figures 1-4 * * Sections II, III * | 1-3,5,6, 12,13 | INV. H02M5/293 H02M5/297 H02J3/38 ADD. H02P3/22 H02J3/18 |
| X | INOMATA K ET AL: "Enhanced fault ride through capability of matrix converter for wind power system", IECON 2013 - 39TH ANNUAL CONFERENCE OF THE IEEE INDUSTRIAL ELECTRONICS SOCIETY, IEEE, 10 November 2013 (2013-11-10), pages 4838-4843, XP032538516, ISSN: 1553-572X, DOI: 10.1109/IECON.2013.6699918 [retrieved on 2013-12-30] | 1-3,5,6, 8,9,12, 13 | |
| Y | * abstract; figures 2.1,2.2,2.3,4.1,4.3,4.4,4.5,4.6 * * Sections II, III, IV * | 8-10 | TECHNICAL FIELDS SEARCHED (IPC) H02M H02J H02P |
| X | US 2013/328309 A1 (FUJII JUNJI [JP] ET AL) 12 December 2013 (2013-12-12) | 1-3,12, 13 | |
| Y | * figures 1,3-11,13 * * paragraphs [0006], [0029], [0041], [0044], [0045], [0048], [0050], [0067], [0068], [0069], [0071] - [0073], [0081] - [0106] * | 5-11 | |

-/--

The present search report has been drawn up for all claims

| Place of search | Date of completion of the search | Examiner |
|---|---|---|
| The Hague | 7 May 2015 | Kail, Maximilian |

EPO FORM 1503 03.82 (P04C01)

Europäisches
Patentamt

European
Patent Office

Office européen
des brevets

**EUROPEAN SEARCH REPORT**

Application Number

EP 14 19 9698

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | IBARRA E ET AL: "Improvement of the Design Process of Matrix Converter Platforms Using the Switching State Matrix Averaging Simulation Method", IEEE TRANSACTIONS ON INDUSTRIAL ELECTRONICS, IEEE SERVICE CENTER, PISCATAWAY, NJ, USA, vol. 59, no. 1, 1 January 2012 (2012-01-01), pages 220-234, XP011478665, ISSN: 0278-0046, DOI: 10.1109/TIE.2011.2130504 * figures 1-7 * * Section II * | 1-13 | |
| Y | BLAABJERG F ET AL: "Short Term Braking Capability During Power Interruptions for Integrated Matrix Converter-Motor Drives", IEEE TRANSACTIONS ON POWER ELECTRONICS, INSTITUTE OF ELECTRICAL AND ELECTRONICS ENGINEERS, USA, vol. 19, no. 2, 1 March 2004 (2004-03-01), pages 303-311, XP011108578, ISSN: 0885-8993, DOI: 10.1109/TPEL.2004.833453 * Sections II, III; figures 1-3 * | 5-7,11 | |

-/--

TECHNICAL FIELDS
SEARCHED        (IPC)

The present search report has been drawn up for all claims

| Place of search | Date of completion of the search | Examiner |
|---|---|---|
| The Hague | 7 May 2015 | Kail, Maximilian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...............................................................................

& : member of the same patent family, corresponding
    document

EPO FORM 1503 03.82 (P04C01)

Europäisches
Patentamt

European
Patent Office

Office européen
des brevets

## EUROPEAN SEARCH REPORT

Application Number

EP 14 19 9698

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CHRISTIAN KLUMPNER ET AL: "Experimental Evaluation of Ride-Through Capabilities for a Matrix Converter Under Short Power Interruptions", IEEE TRANSACTIONS ON INDUSTRIAL ELECTRONICS, IEEE SERVICE CENTER, PISCATAWAY, NJ, USA, vol. 49, no. 2, 1 April 2002 (2002-04-01), XP011073691, ISSN: 0278-0046 * figures 2-5 * * Sections III A, B * | 5-7,11 | |
| A | JUN KANG ET AL: "High power matrix converter for wind power generation applications", POWER ELECTRONICS AND ECCE ASIA (ICPE&ECCE), 2011 IEEE 8TH INTERNATIONAL CONFERENCE ON, IEEE, 30 May 2011 (2011-05-30), pages 1331-1336, XP031955990, DOI: 10.1109/ICPE.2011.5944394 ISBN: 978-1-61284-958-4 * figures 1,2 * * Section IV * | 1-13 | |

TECHNICAL FIELDS
SEARCHED (IPC)

The present search report has been drawn up for all claims

| Place of search | Date of completion of the search | Examiner |
|---|---|---|
| The Hague | 7 May 2015 | Kail, Maximilian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 14 19 9698

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2015

| Patent document cited in search report | Publication date | Patent family member(s) | Publication date |
|---|---|---|---|
| US 2013328309    A1 | 12-12-2013 | CN      103370534 A<br>CN      203670098 U<br>EP       2677168 A1<br>KR  20130109236 A<br>TW      201308860 A<br>US     2013328309 A1<br>WO     2012111115 A1<br>WO     2012111416 A1 | 23-10-2013<br>25-06-2014<br>25-12-2013<br>07-10-2013<br>16-02-2013<br>12-12-2013<br>23-08-2012<br>23-08-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005287200 A